# EUROPÄISCHE PATENTSCHRIFT

(11) **EP 3 409 087 B1**
(45) Veröffentlichungstag und Bekanntmachung des Hinweises auf die Patenterteilung: **14.10.2020**
(21) Anmeldenummer: 18174114.1
(22) Anmeldetag: 24.05.2018
(51) Int. Cl.: A01B 63/108, A01D 34/64, A01B 59/04, A01D 34/66

(54) **LANDWIRTSCHAFTLICHES ARBEITSGERÄT ZUM ANBAU AN EIN LANDWIRTSCHAFTLICHES ZUGFAHRZEUG**
AGRICULTURAL WORKING MACHINE FOR MOUNTING TO AN AGRICULTURAL TRACTOR
APPAREIL DE TRAVAIL AGRICOLE DESTINÉ AU MONTAGE SUR UN VÉHICULE TRACTEUR AGRICOLE

(30) Priorität: 01.06.2017 DE 102017112066
(43) Veröffentlichungstag der Anmeldung: 05.12.2018
(73) Patentinhaber: CLAAS Saulgau GmbH, 88348 Bad Saulgau (DE)
(72) Erfinder: Epp, Siegfried, 88436 Eberhardzell (DE)

(56) Entgegenhaltungen:
- DE-A1- 19 624 396
- DE-A1-102014 101 232
- DE-U1-202005 021 554
- US-A1- 2008 127 622

## Beschreibung

Die Erfindung betrifft ein landwirtschaftliches Arbeitsgerät zum Anbau an ein landwirtschaftliches Zugfahrzeug.

US2008/0127622 A1 offenbart eine Mähmaschine mit einer Tragkonstruktion, die an einen Traktor kuppelbar ist und einen Tragbalken trägt, an dem ein Mähbalken angelenkt ist, der mittels einer Klappvorrichtung von einer Arbeitsposition in mindestens eine Transportposition und umgekehrt verlagerbar ist, wobei die Klappvorrichtung ein Kippelement, das mit dem Tragbalken und der Tragkonstruktion verbunden ist, eine mit dem Mähbalken verbundene Verbindungsstange und einen doppelt wirkenden Zylinder, der zwischen dem Kippelement und der Verbindungsstange angeordnet ist, umfasst.

Aus DE 196 24 396 A1 ist ein an einem Schlepper anbringbares Mähwerk, insbesondere für den Frontanbau, bekannt mit einem an die Hebevorrichtung des Schleppers anschließbaren Kuppelrahmen und einem die Mähorgane aufnehmenden Tragrahmen, wobei der Tragrahmen über mehrere Stangen, von denen zwei im unteren Bereich und mindestens eine im oberen Bereich angeordnet sind, gegenüber dem Kuppelrahmen in einer vertikalen Ebene angenähert parallelogrammartig schwenkbar ist und diese Schwenkbarkeit auf einen Winkelbereich begrenzt ist, wobei die Anordnung und Ausbildung der Stangen abweichend von einer genauen Parallelogramm-Anordnung so getroffen ist, dass erstens der Momentanpol als Schnittpunkt der Verlängerungslinien der Stangen bei mittlerer Arbeitsstellung des Mähwerks unterhalb der horizontalen Bodenfläche liegt und dass zweitens sich der Anstellwinkel der Mähorgane beim Verschwenken des Tragrahmens in einer vertikalen Ebene nach oben verkleinert.

DE 20 2005 021 554 U1 offenbart eine Mähmaschine, insbesondere Seitenmähwerk zum Anbau an eine Hubeinrichtung eines landwirtschaftlichen Trägerfahrzeugs, mit einer in einer Arbeits- und Betriebsstellung seitlich von dem landwirtschaftlichen Trägerfahrzeug geführten Mäheinrichtung, welche eine Anzahl von um eine vertikale Achse rotierende Mähklingen aufnehmende Schneidorgane umfasst, mit einer Trage- und Führungseinrichtung als Verbindungsglied zwischen Mähmaschine und Trägerfahrzeug mit einem verschwenkbaren Auslegerarm zum Verklappen der Mäheinrichtung von einer etwa horizontalen Arbeits- und Betriebsstellung in eine angehobene Vorgewende- und/oder Transportstellung, wobei der Auslegerarm der Trageinrichtung zweiteilig ist und ein erstes Auslegerelement, und ein zweites Auslegerelement umfasst, wobei das erste Auslegerelement als Winkelhebel ausgebildet das Bindeglied zwischen der Tragkonstruktion und dem zweiten Auslegerelement ist.

Aus der DE 10 2014 101 232 A1 ist ein als Mähwerk ausgebildetes landwirtschaftliches Arbeitsgerät für einen Frontanbau an ein landwirtschaftliches Zugfahrzeug bekannt. Dieses Arbeitsgerät verfügt über einen Anbaurahmen, über welchen das Arbeitsgerät an ein Fronthubwerk eines landwirtschaftlichen Zugfahrzeugs ankoppelbar ist. Das Arbeitsgerät verfügt weiterhin über einen Tragrahmen, an welchem eine Arbeitseinheit, die als Mäheinheit ausgebildet ist, angreift. Anbaurahmen und Tragrahmen sind über Lenker unter Ausbildung einer Viergelenkkinematik miteinander gekoppelt. Zwischen den Enden der Lenker sowie dem Anbaurahmen und Tragrahmen sind dabei vier Schwenkachsen ausgebildet.

Das Arbeitsgerät der DE 10 2014 101 232 A1 umfasst weiterhin eine Parkklappe, die am Anbaurahmen gelenkig gelagert ist. Die Parkklappe ist zwischen einer Freigabeposition und einer Fixierposition verlagerbar. Es besteht Bedarf an einem Arbeitsgerät mit verbesserter Handhabbarkeit der Parkklappe.

Diese Aufgabe wird durch ein landwirtschaftliches Arbeitsgerät nach Anspruch 1 gelöst.

Erfindungsgemäß ist die Parkklappe derart ausgebildet, dass dieselbe aus einer Blockierposition, in welcher dieselbe die Mehrgelenkkinematik blockiert oder sperrt, selbsttätig in eine Freigabeposition, in welcher dieselbe die Mehrgelenkkinematik freigibt, zurückkehrt. Dann, wenn das landwirtschaftliche Arbeitsgerät aus einer Parkstellung heraus in eine Arbeitsstellung zu überführen ist, kann sich die Parkklappe selbsttätig aus ihrer Blockierposition in ihre Freigabeposition bewegen. Hierzu ist es nicht erforderlich, dass ein Fahrer des Zugfahrzeugs oder eine sonstige Person manuell auf die Parkklappe zugreift.

Nach einer Weiterbildung sind die Parkklappe und ein mit der Parkklappe zusammenwirkender Fixierhebel jeweils mit einem ersten Ende am Anbaurahmen gelagert, wobei ein zweites Ende des Fixierhebels in einer Kulissenführung der Parcklappe geführt ist. Die Kulissenführung der Parkklappe weist mehrere Abschnitte auf, nämlich einen ersten Abschnitt, der im Zusammenspiel mit dem zweiten Ende des Fixierhebels die Parkklappe fixiert, und einen zweiten Abschnitt, der im Zusammenspiel mit dem zweiten Ende des Fixierhebels die Parkklappe freigibt. Diese Ausführung ist besonders einfach und robust. Das Zusammenspiel zwischen Fixierhebel und Parkklappe erlaubt einerseits eine einfache und zuverlässige Überführung der Parkklappe ausgehend von der Freigabeposition in eine Fixierposition und andererseits anders herum von der Fixierposition über die Blockierposition in die Freigabeposition.

Nach einer Weiterbildung ist an einem Lenker ein Rastelement ausgebildet, welches mit einem zweiten Ende der Parkklappe in Eingriff bringbar ist. Vorzugsweise weist das Rastelement eine Einfahrschräge für das zweite Ende der Parkklappe auf. Diese Ausführung ist bevorzugt, um das selbsttätige Zurückkehren der Parcklappe in die Freigabeposition zu gewährleisten.

Nach einer Weiterbildung ist das zweite Ende des Fixierhebels im zweiten Abschnitt der Kulissenführung der Parkklappe geführt, wenn bei Arbeitsgerät in Arbeitsstellung das Rastelement mit dem zweiten Ende der Parkklappe außer Eingriff ist, und die Parkklappe eine Freigabeposition einnimmt.

Dann, wenn bei Arbeitsgerät in Arbeitsstellung das Rastelement mit dem zweiten Ende der Parkklappe außer Eingriff ist und die Parkklappe eine Fixierposition einnimmt, ist das zweite Ende des Fixierhebels im ersten Abschnitt der Kulissenführung der Parkklappe geführt.

Dann, wenn bei Arbeitsgerät in Parkstellung das Rastelement mit dem zweiten Ende der Parkklappe in Eingriff ist und die Parkklappe die Blockierposition einnimmt, ist das zweite Ende des Fixierhebels im zweiten Abschnitt der Kulissenführung der Parkklappe geführt.

Dann, wenn bei Überführung des Arbeitsgeräts von der Arbeitsstellung in die Parkstellung und bei Parkklappe in Fixierposition das zweite Ende der Parkklappe in Eingriff mit dem Rastelement gelangt, überführt vorzugsweise die Einfahrschräge des Rastelements das zweite Ende des Fixierhebels vom ersten Abschnitt der Kulissenführung der Parkklappe in den zweiten Abschnitt der Kulissenführung der Parkklappe und überführt so die Parkklappe von der Fixierposition in die Blockierposition. Diese Details erlauben ein besonders bevorzugtes Überführen des landwirtschaftlichen Arbeitsgeräts zwischen der Arbeitsstellung und der Parkstellung sowie eine besonders vorteilhafte Überführung der Parkklappe zwischen der Fixierposition über die Blockierposition in die Freigabeposition.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigen:
- Fig. 1: eine schematische Darstellung eines erfindungsgemäßen Arbeitsgeräts in der Arbeitsstellung mit Parkklappe in der Freigabeposition;
- Fig. 2: eine schematische Darstellung des erfindungsgemäßen Arbeitsgeräts der Fig. 1 in der Arbeitsstellung mit Parkklappe in der Fixierposition;
- Fig. 3: eine schematische Darstellung des erfindungsgemäßen Arbeitsgeräts der Fig. 1, 2 in der Parkstellung mit Parkklappe in der Blockierposition.

Die Erfindung betrifft einen ein landwirtschaftliches Arbeitsgerät zum Anbau an ein landwirtschaftliches Zugfahrzeug.

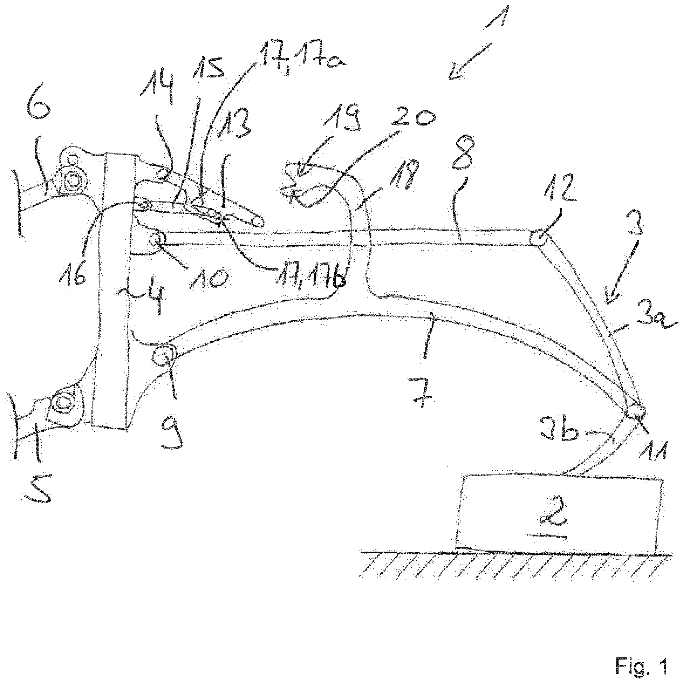

Fig. 1 bis 3 zeigen ein bevorzugtes Ausführungsbeispiel eines als Mähwerk ausgebildeten, landwirtschaftlichen Arbeitsgeräts 1 für den Anbau an ein landwirtschaftliches Zugfahrzeug, insbesondere für einen Frontanbau oder alternativ auch für einen Heckanbau. Alternativ kann das Arbeitsgerät ein Mulchgerät, ein Räumschild oder ein Schneeschiebeschild o. ä. sein.

Das Arbeitsgerät 1 verfügt über eine Arbeitseinheit 2, die dann, wenn das Arbeitsgerät 1 als Mähwerk ausgebildet ist, eine Mäheinheit bildet. Die Arbeitseinheit 2 ist an einen Tragrahmen 3 befestigt, wobei der Tragrahmen 3 zwei gelenkig miteinander verbundene Tragrahmenabschnitte 3a, 3b aufweist.

Das Arbeitsgerät 1 verfügt weiterhin über einen Anbaurahmen 4, über welchen das Arbeitsgerät 1 an ein Hubwerk eines landwirtschaftlichen Zugfahrzeugs ankoppelbar ist. Vom Hubwerk sind in Fig. 1 ein Oberlenker 6 und ein Unterlenker 5 gezeigt, die an dem Anbaurahmen 4 angreifen.

Das landwirtschaftliche Arbeitsgerät verfügt zusätzlich zum Anbaurahmen 4 und Tragrahmen 3 über mindestens zwei Lenker 7, 8. Die Lenker 7, 8 sind mit dem Tragrahmen 3 und dem Anbaurahmen 4 unter Ausbildung einer Mehrgelenkkinematik, im gezeigten Ausführungsbeispiel unter Ausbildung einer Viergelenkkinematik, miteinander verbunden.

So ist zwischen einem ersten Ende des Lenkers 7 und dem Anbaurahmen 4 eine erste Schwenkachse 9 ausgebildet. Eine weitere Schwenkachse 10 ist zwischen dem Anbaurahmen 4 und einem ersten Ende des Lenkers 8 ausgebildet. Weitere Schwenkachsen 11, 12 sind zwischen den zweiten Enden der Lenker 7, 8 und dem Tragrahmen 3 ausgebildet, wobei in der Schwenkachse 11 der Lenker 7 an beiden Tragrahmenabschnitten 3a, 3b des Tragrahmens 3 gelenkig angreift.

Das landwirtschaftliche Anbaugerät 1 verfügt weiterhin über eine Parkklappe 13. Die Parkklappe 13 greift mit einem ersten Ende gelenkig am Anbaurahmen 4 unter Ausbildung einer Schwenkachse 14 an.

Die Mehrgelenkkinematik ist mithilfe der Parkklappe 13 blockierbar.

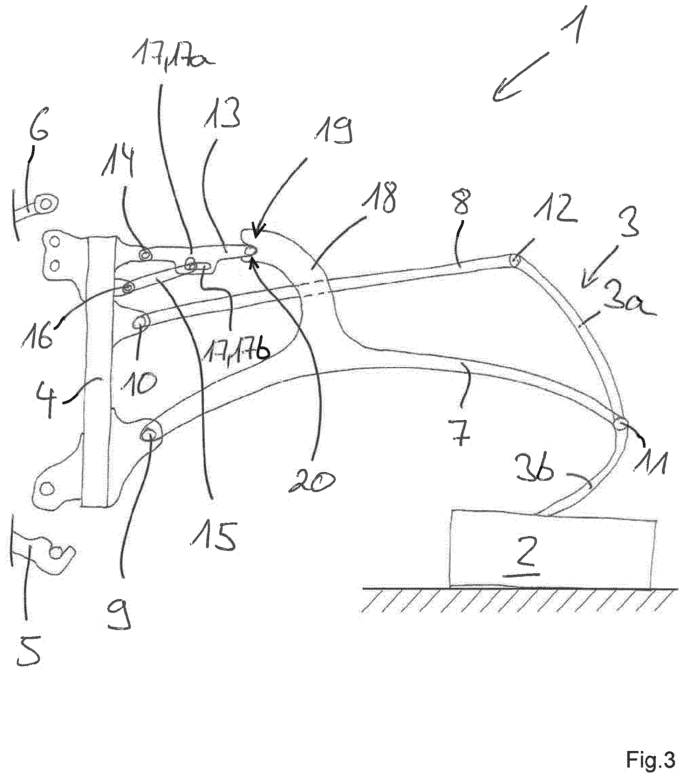

Die Parkklappe 13 ist derart ausgebildet, dass dieselbe aus einer Blockierposition (siehe Fig. 3), in welcher die dieselbe die Mehrgelenkkinematik blockiert, selbsttätig in eine Freigabeposition (siehe Fig. 1) zurückkehrt, in welcher dieselbe die Mehrgelenkkinematik freigibt.

Mit der Parkklappe 13 wirkt ein Fixierhebel 15 zusammen.

Der Fixierhebel 15 ist ebenso wie die Parkklappe 13 mit einem ersten Ende gelenkig an dem Anbaurahmen 4 befestigt, und zwar unter Ausbildung einer weiteren Schwenkachse 16. Ein gegenüberliegendes zweites Ende des Fixierhebels 15 ist in einer Kulissenführung der Parkklappe 13 geführt.

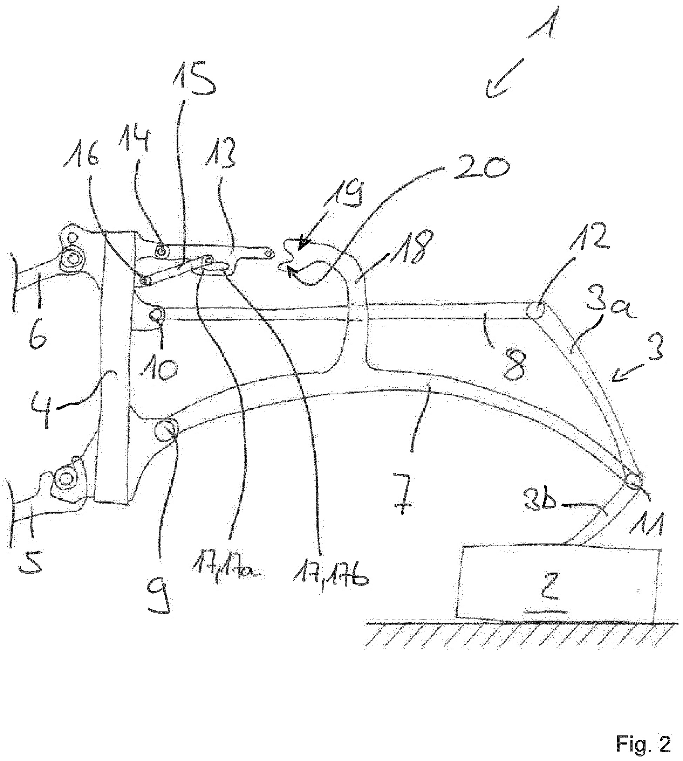

Die Kulissenführung 17 weist mehrere Abschnitte auf. Dann, wenn das zweite Ende des Fixierhebels 15 in einen ersten Abschnitt 17a der Kulissenführung 17 der Parkklappe 13 eingreift, fixiert das Zusammenspiel aus Fixierhebel 15 und Parcklappe 13 die Parkklappe 13 in einer Fixierposition (siehe Fig. 2). Dabei bildet der erste Abschnitt 17a der Kulissenführung 17 eine Stützkerbe bzw. einen Vorsprung, an dem das zweite Ende des Fixierhebels 15 einhakt, so dass die Parkklappe 13 in der Fixierposition auf dem Fixierhebel 15 abgestützt ist.

Dann hingegen, wenn das zweite Ende des Fixierhebels 17 in einen zweiten Abschnitt 17b der Kulissenführung der Parkklappe 13 eingreift, gibt das Zusammenspiel aus Fixierhebel 15 und Parkklappe 13 die Parkklappe 13 frei (siehe Fig. 1, 3).

Um das Arbeitsgerät 1 bzw. die Mehrgelenkkinematik des Arbeitsgeräts 1 in der Parkstellung (siehe Fig. 3) zu blockieren, ist an einem Lenker, im Ausführungsbeispiel der Fig. 1 bis 3 am Lenker 7, nämlich an einem Vorsprung 18 des Lenkers 7, ein Rastelement 19 ausgebildet, welches mit dem zweiten Ende der Parkklappe 13 in Eingriff gebracht werden kann.

Dann, wenn, wie in Fig. 1 gezeigt, das Arbeitsgerät 1 sich in der Arbeitsstellung befindet und an das Hubwerk des Zugfahrzeugs angekoppelt ist, ist das Rastelement 19 des Lenkers 7 außer Eingriff mit dem zweiten Ende der Parkklappe 13. Die Parkklappe 13 nimmt ihre Freigabeposition ein, und das zweite Ende des Fixierhebels 15 ist im zweiten Abschnitt 17b der Kulissenführung 17 der Parkklappe 3 geführt.

Soll das Arbeitsgerät, ausgehend von der Arbeitsstellung der Fig. 1 in die Parkstellung der Fig. 3 überführt werden, so wird zunächst die Parkklappe 13 in die in Fig. 2 gezeigte Fixierposition überführt, nämlich dann, wenn das Arbeitsgerät 1 die Arbeitsstellung einnimmt und an die Lenker 5, 6 des Hubwerks des Zugfahrzeugs angekoppelt ist. Hierzu wird die Parkklappe 13 lediglich ausgehend von der in Fig. 1 gezeigten Freigabeposition in die in Fig. 2 gezeigte Fixierposition überführt, wobei hierbei das zweite Ende des Fixierhebels 15 in den ersten Abschnitt 17a der Kulissenführung 17 gelangt und so die Parkklappe 13 in ihrer Fixierposition fixiert.

Dann, wenn das Arbeitsgerät die Parkstellung gemäß Fig. 3 einnimmt, steht das Rastelement 19 mit dem zweiten Ende der Parkklappe 13 in Eingriff, das zweite Ende des Fixierhebels 15 ist aus dem ersten Abschnitt 17a der Kulissenführung 17 heraus in den zweiten Abschnitt 17b der Kulissenführung 17 der Parkklappe 13 überführt.

Dann, wenn das Arbeitsgerät 1 aus dem Zustand der Fig. 2 heraus in den Zustand der Fig. 3 überführt wird, wenn also die Lenker 5, 6 des Hubwerks des landwirtschaftlichen Zugfahrzeugs vom Anbaurahmen 4 abgekoppelt werden und sich der Anbaurahmen 4 infolge der Schwerkraft nach unten bewegt, wird die Viergelenckinematik verschwenkt. Hierbei gelangt das zweite Ende der in der Fixierposition durch den Fixierhebel 15 fixierten Parkklappe 13 automatisch in Eingriff mit dem Rastelement 19 des Lenkers 7.

Im Bereich des Rastelements 19 ist dabei eine Einfahrschräge 20 ausgebildet, die dann, wenn das zweite Ende der Parkklappe 13 in Eingriff mit dem Rastelement 19 gelangt, die Parkklappe 13 etwas nach oben verschwenkt, sodass dann das zweite Ende des Fixierhebels 15 automatisch aus dem ersten Abschnitt 17a der Kulissenführung heraus in den zweiten Abschnitt 17b der Kulissenführung 17 hinein überführt wird. Durch das Anheben der Parkklappe 13 beim Einlaufen in das Rastelement 19 wird das zweite Ende des Fixierhebels 15 in der - vom ersten Abschnitt 17a der Kulissenführung 17 gebildeten - Stützkerbe entlastet und fällt durch seine Gewichtskraft aus der Stützkerbe heraus in den zweiten Abschnitt 17b der Kulissenführung 17. Wenn das zweite Ende der Parkklappe 13 im Rastelement 19 eingerastet ist, dann ist die Parkklappe 13 von der Fixierposition in die Blockierposition überführt. Das Überführen des zweiten Endes des Fixierhebels 15 vom ersten Abschnitt 17a zum zweiten Abschnitt 17b der Kulissenführung 17 kann ggf. durch eine Feder unterstützt werden.

Wird nachfolgend, ausgehend von der Parkstellung der Fig. 3 das Arbeitsgerät 1 wieder an ein Hubwerk des Zugfahrzeugs angekoppelt und der Anbaurahmen 4 über das Hubwerk angehoben, gelangt das zweite Ende der Parkklappe 13 außer Eingriff mit dem Rastelement 19 und die Parkklappe 13 kann infolge des Umstands, dass das zweite Ende des Fixierhebels 15 sich im zweiten Abschnitt 17b der Kulissenführung 17 befindet, selbsttätig in die in Fig. 1 gezeigte Freigabeposition zurückkehren.

Das erfindungsgemäße Arbeitsgerät 1 kann ohne manuellen Zugriff von einer Parkstellung in eine Arbeitsstellung überführt werden. Hierzu ist kein manueller Zugriff auf die Parkklappe 13 erforderlich. Dadurch kann Arbeitszeit eingespart werden.

Vorzugsweise ist am Fixierhebel 15 ein Handgriff angeordnet, mit welchem ein Bediener die Parkklappe 13 in die Fixierposition verlagern kann.

Statt der beispielhaften Kulissenführung kann alternativ eine Kerbe oder ein Vorsprung vorgesehen werden, an der bzw. dem sich der Fixierhebel und die Parcklappe in der Fixierposition miteinander verhaken.

### Bezugszeichenliste

- 1: Arbeitsgerät
- 2: Arbeitseinheit
- 3: Tragrahmen
- 3a: Tragrahmenabschnitt
- 3b: Tragrahmenabschnitt
- 4: Anbaurahmen
- 5: Unterlenker
- 6: Oberlenker
- 7: Lenker
- 8: Lenker
- 9: Schwenkachse
- 10: Schwenkachse
- 11: Schwenkachse
- 12: Schwenkachse
- 13: Parkklappe
- 14: Schwenkachse
- 15: Fixierhebel
- 16: Schwenkachse
- 17: Kulissenführung
- 17a: Abschnitt
- 17b: Abschnitt
- 18: Vorsprung
- 19: Rastelement
- 20: Einfahrschräge

## Patentansprüche

1. Landwirtschaftliches Arbeitsgerät (1) zum Anbau an ein landwirtschaftliches Zugfahrzeug,
mit einem Anbaurahmen (4), über welchen das Arbeitsgerät an ein Hubwerk des Zugfahrzeugs ankoppelbar ist,
mit einem Tragrahmen (3), an welchem eine Arbeitseinheit (2) angreift,
wobei der Anbaurahmen (4) und der Tragrahmen (3) über mindestens zwei Lenker (7, 8) unter Ausbildung einer Mehrgelenkkinematik miteinander verbunden sind,
mit einer Parkklappe (13), welche am Anbaurahmen (4) gelenkig gelagert ist und über welche die Mehrgelenkkinematik blockierbar ist,
**dadurch gekennzeichnet, dass**
die Parkklappe (13) derart ausgebildet ist, dass dieselbe aus einer Blockierposition, in welcher dieselbe die Mehrgelenkkinematik blockiert, selbsttätig in eine Freigabeposition, in welcher dieselbe die Mehrgelenkkinematik freigibt, zurückkehrt, wenn das landwirtschaftliche Arbeitsgerät aus einer Parkstellung heraus in eine Arbeitsstellung überführt wird.

2. Arbeitsgerät nach Anspruch 1, **dadurch gekennzeichnet, dass** die Parkklappe (13) und ein mit der Parkklappe (13) zusammenwirkender Fixierhebel (15) jeweils mit einem ersten Ende am Anbaurahmen (4) gelenkig gelagert sind, wobei ein zweites Ende des Fixierhebels (15) in einer Kulissenführung (17) der Parkklappe (13) geführt ist.

3. Arbeitsgerät nach Anspruch 2, **dadurch gekennzeichnet, dass** die Kulissenführung (17) der Parkklappe (13) mehrere Abschnitte aufweist, nämlich
einen ersten Abschnitt (17a), der im Zusammenspiel mit dem zweiten Ende des Fixierhebels (15) die Parkklappe (13) in einer Fixierposition fixiert,
einen zweiten Abschnitt (17b), der im Zusammenspiel mit dem zweiten Ende des Fixierhebels (15) die Parkklappe (13) freigibt.

4. Arbeitsgerät nach Anspruch 2 oder 3, **dadurch gekennzeichnet, dass** an einem Lenker (7) ein Rastelement (19) ausgebildet ist, welches mit einem zweiten Ende der Parkklappe (13) in Eingriff bringbar ist.

5. Arbeitsgerät nach Anspruch 4, **dadurch gekennzeichnet, dass** das Rastelement (19) eine Einfahrschräge (20) für das zweite Ende der Parkklappe (13) aufweist.

6. Arbeitsgerät nach Anspruch 4 oder 5, **dadurch gekennzeichnet, dass**
dann, wenn bei Arbeitsgerät (1) in Arbeitsstellung das Rastelement (19) mit dem zweiten Ende der Parkklappe (13) außer Eingriff ist und die Parkklappe (13) die Freigabeposition einnimmt, das zweite Ende des Fixierhebels (15) im zweiten Abschnitt (17b) der Kulissenführung (17) der Parkklappe (13) geführt ist,
dann, wenn bei Arbeitsgerät (13) in Arbeitsstellung das Rastelement (19) mit dem zweiten Ende der Parkklappe (13) außer Eingriff ist und die Parkklappe (13) die Fixierposition einnimmt, das zweite Ende des Fixierhebels (15) im ersten Abschnitt (17a) der Kulissenführung (17) der Parkklappe (13) geführt ist,
dann, wenn bei Arbeitsgerät (1) in Parkstellung das Rastelement (19) mit den zweiten Ende der Parkklappe (13) in Eingriff ist und die Parkklappe (13) die Blockierposition einnimmt, das zweite Ende des Fixierhebels (15) im zweiten Abschnitt (17b) der Kulissenführung (17) der Parkklappe (13) geführt ist.

7. Arbeitsgerät nach Anspruch 6, **dadurch gekennzeichnet, dass** dann, wenn bei Überführung des Arbeitsgeräts (1) von der Arbeitsstellung in die Parkstellung und bei Parkklappe (13) in Fixierposition das zweite Ende der Parkklappe (13) in Eingriff mit dem Rastelement (19) gelangt, die Einfahrschräge (20) die Parkklappe (13) von der Fixierposition in die Blockierposition überführt.

8. Arbeitsgerät nach Anspruch 7, **dadurch gekennzeichnet, dass** hierbei die Einfahrschräge (20) des Rastelements (19) das zweite Ende des Fixierhebels (15) vom ersten Abschnitt (17a) der Kulissenführung (17) der Parkklappe (13) in den zweiten Abschnitt (17b) der Kulissenführung (17) der Parkklappe (13) überführt.

9. Arbeitsgerät nach einem der Ansprüche 1 bis 8, **dadurch gekennzeichnet, dass** dasselbe dem Frontanbau an das Zugfahrzeug dient.

10. Arbeitsgerät nach einem der Ansprüche 1 bis 9, **dadurch gekennzeichnet, dass** dasselbe ein Mähwerk, ein Mulchgerät, ein Räumschild oder ein Schneeschiebeschild ist.

## Claims

1. An agricultural working implement (1) for attachment to an agricultural towing vehicle,
comprising an attachment frame (4), by way of which the working implement can be coupled to a lift mechanism of the towing vehicle,
comprising a support frame (3) which is engaged by a working unit (2),
wherein the attachment frame (4) and the support frame (3) are connected together by way of at least two links (7, 8) to form a multi-joint kinematic assembly,
comprising a parking flap (13) which is hingedly mounted to the attachment frame (4) and by way of which the multi-joint kinematic assembly can be blocked,
**characterised in that**
the parking flap (13) is so designed that same automatically returns from a blocking position in which same blocks the multi-joint kinematic assembly into a release position in which same releases the multi-joint kinematic assembly when the agricultural working implement is transferred from a parking position into a working position.

2. A working implement according to claim 1 **characterised in that** the parking flap (13) and a fixing lever (15) co-operating with the parking flap (13) are respectively hingedly mounted with a first end to the attachment frame (4), wherein a second end of the fixing lever (15) is guided in a sliding guide (17) of the parking flap (13).

3. A working implement according to claim 2 **characterised in that** the sliding guide (17) of the parking flap (13) has a plurality of portions, namely
a first portion (17a) which in interaction with the second end of the fixing lever (15) fixes the parking flap (13) in a fixing position, and
a second portion (17b) which in interaction with the second end of the fixing lever (15) releases the parking flap (13).

4. A working implement according to claim 2 or claim 3 **characterised in that** provided on a link member (7) is a latching element (19) which can be brought into engagement with a second end of the parking flap (13).

5. A working implement according to claim 4 **characterised in that** the latching element (19) has an inclined lead-in surface (20) for the second end of the parking flap (13).

6. A working implement according to claim 4 or claim 5 **characterised in that**
when with the working implement (1) in the working position the latching element (19) is out of engagement with the second end of the parking flap (13) and the parking flap (13) assumes the release position the second end of the fixing lever (15) is guided in the second portion (17b) of the sliding guide (17) of the parking flap (13),
when with the working implement (13) in the working position the latching element (19) is out of engagement with the second end of the parking flap (13) and the parking flap (13) assumes the fixing position the second end of the fixing lever (15) is guided in the first portion (17a) of the sliding guide (19) of the parking flap (13), and
when with the working implement (1) in the parking position the latching element (19) is in engagement with the second end of the parking flap (13) and the parking flap (13) assumes the blocking position the second end of the fixing lever (15) is guided in the second portion (17b) of the sliding guide (17) of the parking flap (13).

7. A working implement according to claim 6 **characterised in that** when with the working implement (1) being transferred from the working position into the parking position and with the parking flap (13) in the fixing position the second end of the parking flap (13) comes into engagement with the latching element (19) the inclined lead-in surface (20) transfers the parking flap (13) from the fixing position into the blocking position.

8. A working implement according to claim 7 **characterised in that in that** case the inclined lead-in surface (20) of the latching element (19) transfers the second end of the fixing lever (15) from the first portion (17a) of the sliding guide (17) of the parking flap (13) into the second portion (17b) of the sliding guide (17) of the parking flap (13).

9. A working implement according to one of claims 1 to 8 **characterised in that** it serves for front attachment to the towing vehicle.

10. A working implement according to one of claims 1 to 9 **characterised in that** same is a mowing mechanism, a mulching implement, a scraper blade or a snow clearing blade.

## Revendications

1. Equipement de travail agricole (1) destiné à être attelé à un véhicule tracteur agricole,
comprenant un châssis d'attelage (4) par l'intermédiaire duquel l'équipement de travail peut être accouplé à un mécanisme de levage du véhicule tracteur,
comprenant un châssis support (3) sur lequel est fixée une unité de travail (2),
le châssis d'attelage (4) et le châssis support (3) étant reliés entre eux par au moins deux bielles (7, 8) en formant un système cinématique à articulations multiples,
comprenant un volet de stationnement (13) qui est monté de façon articulée sur le châssis d'attelage (4) et qui permet de bloquer le système cinématique à articulations multiples,
**caractérisé en ce que**
le volet de stationnement (13) est agencé de manière à revenir d'une position de blocage, dans laquelle il bloque le système cinématique à articulations multiples, automatiquement dans une position de libération dans laquelle il libère le système cinématique à articulations multiples, lorsque l'équipement de travail agricole est amené d'une position de stationnement dans une position de travail.

2. Equipement de travail selon la revendication 1, **caractérisé en ce que** le volet de stationnement (13) et un levier d'immobilisation (15) coopérant avec le volet de stationnement (13) sont articulés respectivement avec une première extrémité sur le châssis d'attelage (4), une deuxième extrémité du levier d'immobilisation (15) étant guidée dans un guide-coulisse (17) du volet de stationnement (13).

3. Equipement de travail selon la revendication 2, **caractérisé en ce que** le guide-coulisse (17) du volet de stationnement (13) présente plusieurs parties, à savoir
une première partie (17a) qui, en coopération avec la deuxième extrémité du levier d'immobilisation (15), bloque le volet de stationnement (13) dans une position d'immobilisation,
une deuxième partie (17b) qui, en coopération avec la deuxième extrémité du levier d'immobilisation (15), libère le volet de stationnement (13).

4. Equipement de travail selon la revendication 2 ou 3, **caractérisé en ce qu'**il est prévu sur une bielle (7), un élément de verrouillage (19) qui peut être amené en prise avec une deuxième extrémité du volet de stationnement (13).

5. Equipement de travail selon la revendication 4, **caractérisé en ce que** l'élément de verrouillage (19) présente un biseau d'engagement (20) pour la deuxième extrémité du volet de stationnement (13).

6. Equipement de travail selon la revendication 4 ou 5, **caractérisé en ce que**
lorsque l'équipement de travail (1) est en position de travail et l'élément de verrouillage (19) est hors de prise d'avec la deuxième extrémité du volet de stationnement (13) et le volet de stationnement (13) occupe la position de libération, la deuxième extrémité du levier d'immobilisation (15) est guidée dans la deuxième partie (17b) du guide-coulisse (17) du volet de stationnement (13),
lorsque l'équipement de travail (13) est en position de travail et l'élément de verrouillage (19) est hors de prise d'avec la deuxième extrémité du volet de stationnement (13) et le volet de stationnement (13) occupe la position d'immobilisation, la deuxième extrémité du levier d'immobilisation (15) est guidée dans la première partie (17a) du guide-coulisse (17) du volet de stationnement (13),
lorsque l'équipement de travail (1) est en position de stationnement et l'élément de verrouillage (19) est en prise avec la deuxième extrémité du volet de stationnement (13) et le volet de stationnement (13) occupe la position de blocage, la deuxième extrémité du levier d'immobilisation (15) est guidée dans la deuxième partie (17b) du guide-coulisse (17) du volet de stationnement (13).

7. Equipement de travail selon la revendication 6, **caractérisé en ce que**, lorsque l'équipement de travail (1) est amené de la position de travail à la position de stationnement, et lorsque le volet de stationnement (13) est dans la position d'immobilisation et la deuxième extrémité du volet de stationnement (13) entre en prise avec l'élément de verrouillage (19), le biseau d'engagement (20) fait passer le volet de stationnement (13) de la position d'immobilisation à la position de blocage.

8. Equipement de travail selon la revendication 7, **caractérisé en ce que** le biseau d'engagement (20) de l'élément de verrouillage (19) fait ainsi passer la deuxième extrémité du levier d'immobilisation (15) de la première partie (17a) du guide-coulisse (17) du volet de stationnement (13) à la deuxième partie (17b) du guide-coulisse (17) du volet de stationnement (13).

9. Equipement de travail selon l'une des revendications 1 à 8, **caractérisé en ce que** ledit équipement est destiné à l'attelage frontal sur le véhicule tracteur.

10. Equipement de travail selon l'une des revendications 1 à 9, **caractérisé en ce que** ledit équipement est une faucheuse, un broyeur, une lame de déblaiement ou une lame de déneigement.
